# EUROPÄISCHE PATENTANMELDUNG

(11) **EP 0 722 261 A1**
(43) Veröffentlichungstag der Anmeldung: **17.07.1996**
(21) Anmeldenummer: 95120327.2
(22) Anmeldetag: 21.12.1995
(51) Int. Cl.: H05B 6/06, H05B 3/74

(54) **Kochherd mit Strahlungskochstelle und Induktionskochstelle**

(30) Priorität: 10.01.1995 DE 19500449
(71) Anmelder: E.G.O. Elektro-Geräte Blanc und Fischer GmbH & Co. KG, D-75038 Oberderdingen (DE)
(72) Erfinder: Bogdanski, Franz, Dr., D-75038 Oberderdingen (DE)
(74) Vertreter: Patentanwälte Ruff, Beier, Schöndorf und Mütschele

(57) **Zusammenfassung**

Eine Kochmulde (11) mit einer Glaskeramikplatte (12) enthält eine Induktionskochstelle (13) und mehrere Strahlungskochstellen (14) üblicher Bauart. Die Induktionskochstelle (13) ist in mehrere ringförmige Induktionszonen (19, 20, 21) unterteilt, die jeweils mit einer eigenen Topferkennung (22, 23, 24) versehen und dementsprechend abhängig von der Größe des darauf stehenden Kochgefäßes einzeln angesteuert werden können.

## Beschreibung

### Anwendungsgebiet und Stand der Technik

Die Erfindung betrifft eine Kochstellenbeheizung für Kochgefäße, die unterhalb einer Platte, insbesondere einer Glaskeramikplatte, angeordnet ist.

Induktionsbeheizungen haben den Vorteil einer sehr trägheitsarmen Wärmeerzeugung unmittelbar im Kochgefäß, nämlich im Kochtopfboden. Dem steht ein relativ hoher Bauaufwand für Leistungserzeugung und Steuerung gegenüber. Ferner müssen zur Nutzung der Induktionsbeheizung spezielle induktionstaugliche Kochgefäße angeschafft werden. Normale Edelstahltöpfe sind normalerweise ungeeignet. Diese müssen nicht nur bezüglich des Materials, sondern auch bezüglich ihrer Größe der Induktionskochstelle angepaßt sein, um zu vermeiden, daß Streufelder in der unmittelbaren Umgebung der Kochstelle erzeugt werden.

Aus den DE-42 08 249 A und DE 42 08 252 A sind Induktionsbeheizungen für Kochstellen bekanntgeworden, bei denen in einer gemeinsamen Kochmulde zwei unterschiedlich große Induktionsbeheizungen vorgesehen sind, die von einer teil-integrierten, d.h. bezüglich einiger Grundbauelemente gemeinschaftlichen, jedoch unabhängig voneinander regelbaren Leistungs- und Steuerelektronik versorgt werden.

Es ist dort bereits eine automatische Topferkennung vorgesehen, die mit Dämpfungsmessung arbeitet.

### Aufgabe und Lösung

Aufgabe der Erfindung ist es, eine Kochstellenbeheizung zu schaffen, bei der die obengenannten Probleme beseitigt sind und insbesondere die Gebrauchstauglichkeit und Sicherheit bei einem guten Preis-Leistungsverhältnis verbessert ist.

Diese Aufgabe wird durch den Anspruch 1 gelöst. Dadurch, daß unter einer gemeinsamen Platte vorzugsweise nur eine einzige Induktionskochstelle und eine oder mehrere herkömmliche Kochstellen, beispielsweise Kontakt- oder vorzugsweise Strahlungskochstellen vorhanden sind, kann der Bauaufwand für die gesamte Kocheinheit, die im Folgenden als Herdmulde bezeichnet wird, gering gehalten werden. Dabei ist aber keine wesentliche Verringerung der Gebrauchstauglichkeit zu verzeichnen. Untersuchungen haben gezeigt, daß beim Kochen schnelle Ankochvorgänge, bei denen es besonders auf die trägheitsarme Heizung der Induktionskochstelle ankommt, normalerweise nicht mehrfach gleichzeitig notwendig sind. Insofern reicht eine Induktionskochstelle aus.

Ferner ist es auch für den Benutzer ein Vorteil, ihm eine bevorzugte "Lieblingskochstelle" anzubieten, auf dem er die schnellen Aufheizvorgänge bevorzugt vornimmt. Da die Induktionskochstelle besonderes induktionstaugliches Geschirr benötigt, kann auch die Anschaffung dieses Geschirrs zeitlich verzögert werden, d.h. es ist nicht notwendig, bei Anschaffung eines Induktionsbeheizung enthaltenden Herdes gleich das gesamte Kochgeschirr auszutauschen. Wenige, für diese schnellen Vorgänge auf der Induktionskochstelle vorgesehene Kochgefäße reichen aus.

Besonders im Zusammenhang mit nur einer Induktionskochstelle tritt das Problem der in ihrem Durchmesser unterschiedlich großen Kochgefäße auf. Schon aus Gründen des Kochvorganges und der unterschiedlichen darin gekochten Nahrungsmittel lassen sich diese Größen nicht vereinheitlichen.

Dieses Problem kann dadurch gelöst werden, daß eine Induktionskochstelle vorgesehen ist, die mehrere unabhängig voneinander betreibbare Induktionszonen enthält. Diese können konzentrisch zueinander angeordnet sein, wobei die jeweils äußeren Ringzonen einer zentralen bzw. nach innen angrenzenden Ringzone zugeschaltet werden. Es könnten aber auch Einzelsektoren oder Felder vorgesehen sein, die von jeweils einer räumlich begrenzten Induktionsspule gebildet werden.

Die einzelnen Induktionszonen können automatische Topferkennungs-Mittel aufweisen, die jeweils nur die Induktionszonen mit Kochleistung versorgen, denen ein geeignetes Kochgeschirr zur Leistungsabnahme zugeordnet ist. Es können also unterschiedlich große Kochgeschirre auf die Induktionskochstelle gesetzt werden, und sie paßt sich automatisch in der Größe des von ihr erzeugten elektromagnetischen Feldes daran an. Dieses kann also streng auf den Bereich des Kochgefäßes beschränkt werden, so daß nach außen dringende Störstrahlung sehr klein gehalten werden kann.

Die Anordnung in Sektoren oder Einzelfelder löst auch das Problem des "verschobenen Kochtopfs", so daß auch dabei Störstrahlung vermieden werden kann. Anderenfalls sollte die Topferkennung so ausgebildet sein, daß sie nur bei vollständiger Bedeckung des Feldbereiches die Induktionskochstelle einschaltet und somit den Benutzer notfalls zur Korrektur der Kochgefäß-Zentrierung auf der Kochstelle nötigt. Es ist sinnvoll, entsprechende Anzeigemittel für den Betrieb der Induktionskochstelle und ggf. auch die jeweils eingeschalteten Zonen vorzusehen. Die beschriebene mehrzonige bzw. mehrkreisige Ausführung der Induktionskochstelle ist besonders vorteilhaft im Zusammenhang mit der Anordnung nur einer Induktionskochstelle in einer Herdmulde, kann jedoch auch bei Kochmulden mit mehreren Induktionskochstellen oder ohne Kombination mit herkömmlichen Kochstellen mit Vorteil eingesetzt werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

### KURZBESCHREIBUNG DER ZEICHNUNG

Ausführungsbeispiele der Erfindung sind in den Zeichnungen dargestellt und werden im Folgenden näher erläutert. In den Zeichnungen zeigen:
- Fig. 1: eine schematische Darstellung einer Herdmulde mit einer Induktions- und einer Strahlungskochstelle,
- Fig. 2: eine schematische Darstellung einer Mehrkreis-Induktionskochstelle in Draufsicht und
- Fig. 3: eine solche Darstellung einer mehrere Einzelfelder enthaltenden Induktionskochstelle.

### BESCHREIBUNG DER AUSFÜHRUNGSBEISPIELE

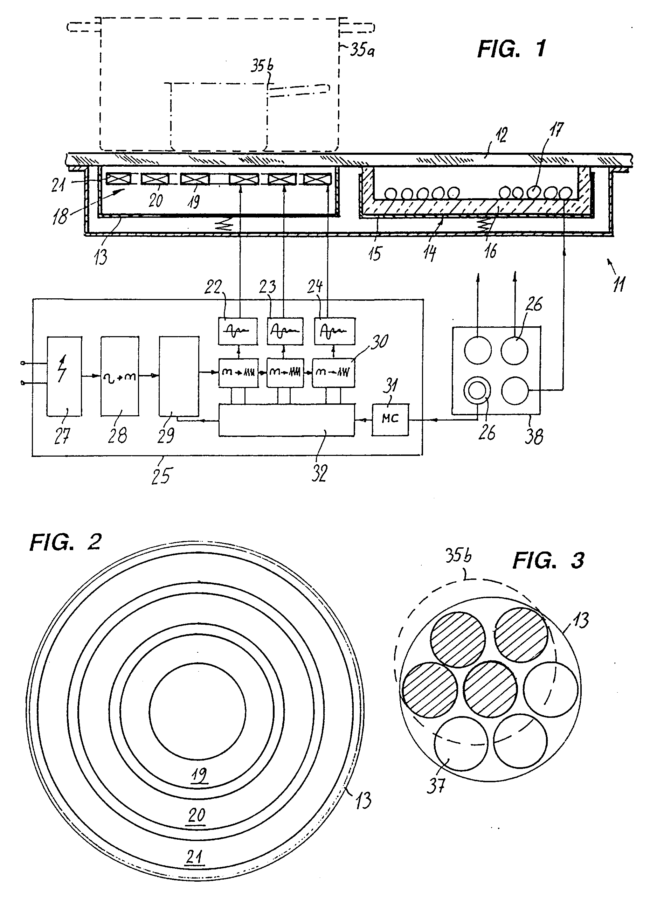

Fig. 1 zeigt eine Kochmulde 11, die unterhalb einer eine Kochfläche bildenden Platte 12, z.B. einer Glaskeramikplatte, angeordnet ist. Sie enthält eine Induktionskochstelle 13 und drei konventionelle Kochstellen, nämlich Strahlungs-Kochstellen 14.

Diese bestehen aus jeweils einer Blechschale 15, in der auf einer Isolation 16 Widerstands-Strahlheizkörper 17 in Form von Heizwendeln oder gewellten Heizbändern angeordnet sind. Derartige Strahlungsheizeinheiten sind beispielsweise in der DE 42 29 373 A und DE 42 29 375 A beschrieben, auf die wegen Einzelheiten hier Bezug genommen wird.

Die Induktionskochstelle enthält Induktionsfelderzeugungsmittel 18 in Form von drei zueinander konzentrischen Spulen 19, 20, 21. Es kann sich dabei um Ringspulen in Form archimedischer Spiralen handeln, jedoch auch um andere Mittel zur Erzeugung eines entsprechenden Induktionsfeldes, das insbesondere auf einen bestimmten Bereich, der hier durch die Abmessung der Spulen repräsentiert ist, beschränkt ist. Weitere, den Induktionsfelderzeugungsmitteln zugeordnete Bauteile, wie Isolationen, Abschirmungen, Rückschlußmittel, Kühlmittel oder dgl., können in der Induktionskochstelle enthalten sein, sind hier aber nicht dargestellt. Näheres darüber sowie auch über die im Folgenden noch erwähnte Steuerung können aus der DE 42 08 252 A entnommen werden, auf die hierzu ausdrücklich Bezug genommen wird.

Die drei ringförmigen Induktionszonen 19, 20, 21 (s. auch Fig. 2) können unabhängig voneinander betrieben werden. Sie verfügen dazu über drei voneinander unabhängig arbeitende Topferkennungsmittel 22, 23, 24, die die jeweils zugeordnete Induktionsheizzone nur dann zuschaltet, wenn ein geeignetes Kochgefäß sich in dieser Zone, d.h. auf dem entsprechenden Flächenabschnitt der Platte 12, befindet.

Die Erzeugung und Steuerung der den Induktionsfelderzeugungsmitteln 18 zugeführten Hochfrequenzleistung geschieht in einem gemeinsamen Steuerteil 25, das eine Basisschaltung mit Funkentstörung und Gleichrichtung enthält. Von einem gemeinsamen Zwischenkreis 29 aus können dann die einzelnen Induktionszonen 19 bis 21 unabhängig voneinander beaufschlagt werden, obwohl sie von einem gemeinsamen Einstellglied 26, beispielsweise einem Leistungsstellglied in Form eines Einstellknopfes beeinflußt werden. Diese Schaltung ist in allen Einzelheiten in der DE 42 08 252 A beschrieben, auf die zur Offenbarung hier Bezug genommen wird. In Fig. 1 sind dementsprechend im Steuerteil 25 eine gemeinsame Funktentstörung 27, Gleichrichtung 28 und Zwischenkreis 29 vorgesehen, die die einzelnen Umrichter 30 für die drei Induktionszonen beaufschlagen. Sie werden gesteuert von einer Steuerung 54, die über einen Mikrocomputer 31 vom Leistungssteller 26 beeinflußt wird.

In diesen Steuermitteln ist, wie in der DE 42 08 252 beschrieben, jeweils die Topferkennung 22 bis 24 schaltungsmäßig und funktionell integriert.

Statt der Verwendung einzelner Umrichter für die einzelnen Induktionszonen könnte auch eine von der Topferkennung gesteuerte Zuschlatung dieser Zonen an einen einzigen Umrichter vorgesehen sein.

Die Topferkennung bildet auch einen Schutz der Umgebung gegen zu starke Induktionsfelder und einen Selbstschutz des Umrichters. Sie arbeitet mit einer Dämpfungsmessung im die jeweilige Induktionsspule enthaltenen Schwingkreis. In diesem Schwingkreis wird, wenn er nicht zur Leistungsabgabe aktiviert ist, in kurzen Abständen während einer Prüfphase eine Halbschwingung erzeugt, die auch mit einem sehr geringen Strom ausgelöst werden kann. Es wird dann das Abklingen dieser Schwingung im Schwingkreis gemessen. Erfolgt es zu langsam, so ist dies ein Zeichen dafür, daß keine ausreichende Dämpfung vorliegt, und es erfolgt keine Leistungsfreigabe des Umrichters.

Bei Vorliegen ausreichender Dämpfung wird, wenn auch im übrigen die Einstellbedingungen vorliegen, die Leistung freigegeben und das entsprechende Induktionsfeld erzeugt. Wenn das Kochgefäß aus dem Bereich der entsprechenden Induktionszone genommen wird, so steigt der Strom im Schwingkreis stark an, weil die Dämpfung abnimmt. Der Strom im Umrichter wird abgegriffen und detektiert. Überschreitet er einen gespeicherten Grenzwert, so wird der Umrichter über die Steuerung 32 ausgeschaltet. Danach beginnt wieder in periodischen Abständen die vorher beschriebene Prüfphase.

Es ist also zu erkennen, daß von den Induktionszonen 19 bis 21 der Induktionskochstelle 18 nur jeweils die eingeschaltet sind, bei denen ein geeignetes Kochgefäß für eine ausreichende Bedämpfung der entsprechenden Schwingkreise sorgt. Wenn also beispielsweise beim Aufsetzen des strichliert dargestellten großen Kochgefäßes 35a alle drei Induktionsringzonen 19 bis 21 eingeschaltet wären, würde bei aufgestelltem kleinem Kochgefäß 35b (strichpunktiert) nur die innere Ringzone 19 Leistung erhalten.

Die Topferkennung kann dementsprechend auch so eingestellt sein, daß sie nur dann die Leistung freigibt, wenn die Dämpfung so ausreichend ist, daß keine unzulässigen Streufelder auftreten können. Bei nur teilweiser Bedeckung einer der Zonen würde diese ausgeschaltet bleiben, ohne daß die Kochstelle ganz außer Betrieb wäre, weil dann die innersten Zonen immer noch arbeiten könnten.

Es könnte auch vorgesehen sein, daß im Falle des Betriebes nicht alle der Zonen einzeln in ihrer Leistung erhöht werden bzw. beim Betrieb aller Zonen die gemeinsame Maximalleistung herabgesetzt wird, um eine gleichmäßigere Beheizung zu erzielen.

Fig. 3 zeigt schematisch eine Anordnung von mehreren Induktionsheizzonen 37, die hier als relativ kleine konzentrierte Induktionsspulen dargestellt sind, die jeweils eine einzelne Induktionszone bzw. ein Induktionsfeld darstellen. Diese sind zu einer dementsprechend mehrfach unterteilten Induktionskochstelle flächenmäßig zusammengefaßt. Sie könnten auch in Form von Sektoren ausgebildet sein. Sie werden ähnlich der in Fig. 1 beschriebenen Variante jeweils einzeln über Topferkennungsmittel angesteuert.

In Fig. 3 ist strichliert das Abbild eines gegenüber dem Zentrum der Induktionskochstelle 18 verschobenen Kochgefäßes 35b gezeigt. Man erkennt, daß nur vier der insgesamt sieben Induktionszonen überdeckt werden, und dementsprechend werden auch nur diese mit Leistung versorgt (durch Schraffierung gekennzeichnet).

Es ist zu erkennen, daß die Kochmulde 11 für den Benutzer eine Schnellkochstelle in Form der Induktionskochstelle 13 bereithält, auf der mit induktionsgeeigneten Kochgefäßen jeder beliebigen Größe die Vorteile des Induktionskochens, nämlich das fast verzögerungsfreie Ankochen mit Wärmeerzeugung direkt im Kochgefäß, genutzt werden können. Trotzdem können auf den übrigen, hier beispielsweise drei Kochstellen, die von dem gemeinsamen Steuerpanel 38 über entsprechende Leistungssteller 26 gerelt werden können, alle übrigen Kochvorgänge in herkömmlicher Weise und dort mit Kochgefäßen üblicher Art und aus jedem Material gearbeitet werden kann. Nach dem Ankochen kann die Induktionskochstelle schnell wieder freigemacht werden und das Fortkochen auf die herkömmlichen Kochstellen, z.B. durch Verschieben des Kochgefäßes dahin, verlagert werden.

## Patentansprüche

1. Kochstellenbeheizung für Kochgefäße (35), die unterhalb einer Platte (12), insbesondere einer Glaskeramikplatte, angeordnet ist, bei der unter der Platte (12) eine Induktionskochstelle (13) und wenigstens eine Elektro-Widerstandskochstelle (14), insbesondere eine Strahlungskochstelle, vorgesehen sind.

2. Kochstellenbeheizung nach Anspruch 1, dadurch gekennzeichnet, daß unter der Platte (12) außer einer oder mehreren Elektro-Widerstandskochstellen (14) nur eine einzige Induktionskochstelle (13) angeordnet ist.

3. Kochstellenbeheizung nach Anspruch 1 oder 2, dadurch gekennzeichnet, daß eine Induktionskochstelle (13) und mehrere Strahlungskochstellen (14) in einer gemeinsamen Kochmulde (11) angeordnet sind.

4. Kochstellenbeheizung, insbesondere nach Anspruch 1, bei der eine Induktionskochstelle (13) vorgesehen ist, die mehrere unabhängig voneinander betreibbare Induktionszonen (19, 20, 21, 37) enthält.

5. Kochstellenbeheizung nach Anspruch 4, dadurch gekennzeichnet, daß die einzelnen Induktionszonen (19, 20, 21) einander umgebend, insbesondere konzentrisch zueinander, angeordnet sind und vorzugsweise äußere Induktionszonen (20, 21) jeweils einer angrenzenden inneren Induktionszone (19, 20) zuschaltbar sind.

6. Kochstellenbeheizung nach Anspruch 4, dadurch gekennzeichnet, daß die Induktionszonen (37) Sektoren oder Einzelfelder bilden.

7. Kochstellenbeheizung nach einem der Ansprüche 4 bis 6, dadurch gekennzeichnet, daß die einzelnen Induktionszonen (19, 20, 21, 37) automatische Topferkennungsmitel aufweisen, die jeweils nur diejenigen Induktionszonen zur Versorgung mit Kochleistung freigeben, denen eine entsprechende Kochgefäß-Bodenfläche (35) zur Leistungsabnahme zugeordnet ist.

8. Kochstellenbeheizung nach Anspruch 7, dadurch gekennzeichnet, daß die leistungsbeaufschlagende Topferkennung (22, 23, 24) mittels einer Dämpfungsmessung in einem eine Induktionsspule der jeweiligen Induktionszone (19, 20, 21, 37) enthaltenden Schwingkreis erfolgt, wobei die Dämpfungsmessung in einer der Leistungsbeaufschlagung der Induktionszone zeitlich vorgeschalteten Prüfphase erfolgt.

9. Kochstellenbeheizung nach einem der Ansprüche 4 bis 8, dadurch gekennzeichnet, daß die Topferkennung (22, 23, 24) so ausgebildet ist, daß das elektromagnetische Feld der jeweils eingeschalteten Induktionszone auf den von dem aufgestellten Kochgefäß (35) im wesentlichen vollständig genutzten Bereich begrenzt ist.
